# EUROPEAN PATENT APPLICATION

(11) **EP 1 225 377 A1**
(43) Date of publication of application: **24.07.2002**
(21) Application number: 00969894.5
(22) Date of filing: 19.10.2000
(51) Int. Cl.: F16J 15/16

(54) **SEAL RING**

(30) Priority: 21.10.1999 JP 29955099
(71) Applicant: Daikin Industries, Ltd., Osaka-shi, Osaka 530-8323 (JP)
(72) Inventor: Yanagiguchi, Tomihiko, Yodogawa-seisakusho, Settsu-shi, Osaka 566-8585 (JP); Sukegawa, Masamichi, Yodogawa-seisakusho, Settsu-shi, Osaka 566-8585 (JP); Asano, Michio, Yodogawa-seisakusho, Settsu-shi, Osaka 566-8585 (JP)
(74) Representative: Klusmann, Peter, Dr.
(86) International application number: JP0007274
(87) International publication number: WO0131237

(57) **Abstract**

A seal ring comprising 40 to 94 % by weight of a polytetrafluoroethylene powder, 3 to 30 % by weight of a heat resistant aromatic polyoxybenzoyl ester resin powder 3 to 30 % by weight of a graphite powder. A stable sealing effect can be obtained for a long period of time since a deformation of the seal ring is small for the use even under a high pressure and an abrasion of an opposite material can be inhibited even if the opposite material is a soft metal. Further a frictional force is small, and a change in a sliding torque is small. Therefore the seal ring is suitable as a seal ring for a power steering where operability and response of the sealing device can be enhanced and also as a seal ring for an automatic transmission which slides at high revolutions and as a seal ring for a shock absorber which is required to have a sealing property under reciprocating sliding environment.

## Description

### TECHNICAL FIELD

The present invention relates to a seal ring, particularly a seal ring which realizes a stable sliding torque for a long period of time from staring of use. The seal ring of the present invention can be suitably used particularly as a seal ring of a valve device of a power steering of passenger cars and large-sized cars. Also since the seal ring of the present invention can realize an abrasion resistance and a stable friction resistance to an opposite material for a long period of time from starting of its use, it can be suitably used as a seal ring for an automatic transmission and also as a seal ring for a shock absorber.

### BACKGROUND ART

To a polytetrafluoroethylene (PTFE) powder (granular resin powder) is added frequently an organic filler such as a polyimide resin powder or an inorganic filler such as a carbon fiber, bronze powder or graphite powder in order to make up for defects such as an insufficient strength of a molded article obtained therefrom while making the best use of its properties such as non-tackiness, sliding property and heat resistance. Thus there have been proposed PTFE compositions prepared in combination with various fillers according to purpose and application.

Seal rings are used for such an application as shown, for example, in a diagrammatic cross-sectional view of Fig. 1. Namely, the seal ring 1 is a ring-like member which is put between the two members (housing 2 and seal ring set body 3) undergoing relative motion at a rotating or sliding portion and is used to seal oil 4. In Fig. 1, the seal ring 1 is wound over the seal ring set body 3 and forms a sliding surface to the housing 2. During the use, as shown in Fig. 2, the seal ring set body 3 rotates on the housing 2, and a relatively high pressure is applied on the seal ring from the oil 4. Further when normal and reverse rotations are repeated, there is a case where a sliding torque fluctuates markedly during the use and an end of the seal ring 1 is abraded as a result of a long term use, thereby causing an extruded portion 5 (Fig. 3). Also when the housing 2 is made of a soft metal such as aluminum, there is a case where the housing 2 is abraded and a concave portion 6 is produced (Fig. 4) and leaking of the oil 4 occurs.

Such problems with the seal ring are important problems to be solved particularly in the devices of automobile such as a power steering in which importance is placed on feeling and safety during driving.

Even in case where the pressure from the oil 4 is relatively low, when the seal ring set body 3 is rotated on the housing 2 at a high speed and the housing 2 is made of a soft metal such as aluminum, as a result of a long term use, there is a case where the housing 2 is abraded and also a concave portion 6 is produced, thereby causing leakage of the oil 4.

Such problems with the seal ring are important problems to be solved particularly in the devices of automobile such as an automatic transmission in which importance is attached to safety during driving.

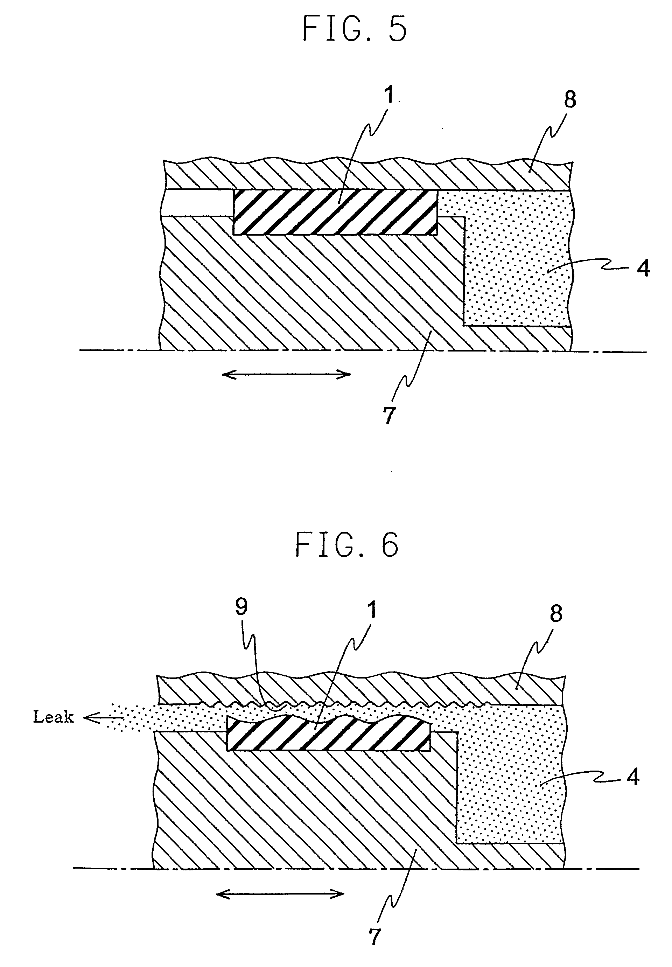

Further when the seal ring 1 is used put between the two members, namely the piston 7 and the cylinder 8 undergoing relative motion as shown in the diagrammatic cross-sectional view of Fig. 5 and when the piston 7 undergoes a reciprocating motion against the cylinder 8 repeatedly while the oil 4 is sealed with the seal ring 1, there is a case where a friction resistance (sliding resistance) produced on the sliding surface between the seal ring 1 and the cylinder 8 during the use fluctuates markedly, an end of the seal ring 1 is abraded as a result of long term use as shown in Fig. 6, and even when the cylinder 8 is made of a relatively hard carbon steel, the cylinder 8 is abraded and a concave portion 9 is produced, thereby causing leaking of the oil 4.

Such problems with the seal ring are important problems to be solved particularly in the devices such as a shock absorber in which importance is attached to safety during the operation.

Examples of known PTFE compositions which have been proposed as the PTFE composition for a seal ring required to have the above-mentioned properties are:
(1) PTFE powder/polyimide (PI) powder/carbon fiber (JP-A-9-208929, etc.)
(2) PTFE powder/heat resistant aromatic polyoxybenzoyl ester resin powder/carbon fiber (JP-B-1-13494, JP-A-11-21408), and
(3) PTFE powder/graphite powder/carbon fiber (JP-A-5-239440).

However particularly under a high oil pressure of not less than 8 MPa, breakage of a seal ring and abrasion of an opposite material (housing) occur in a relatively short period of time, and it has been considered that conventional PTFE compositions have a certain limit in durability.

Also under a sliding environment where the number of revolutions is as high as not less than 7,000 rpm, abrasion of an opposite material occurs in a relatively short period of time, and it has been considered that conventional PTFE compositions have a certain limit in durability.

Further in an environment where a reciprocating slide is repeated under a high oil pressure of not less than 8 MPa, breakage of a seal ring and abrasion of an opposite material occur in a relatively short period of time, and it has been considered similarly that conventional PTFE compositions have a certain limit in durability.

An object of the present invention is to provide a seal ring which undergoes a small change in a sliding torque, is free from breakage and assures a small amount of abrasion of the opposite material during the long term use even under environments of a high oil pressure, the large number of revolutions and a high speed reciprocating motion. The seal ring has properties breaking through limits of the properties of conventional seal rings.

### DISCLOSURE OF INVENTION

Namely, the present invention relates to a seal ring comprising 40 to 94 % by weight of a PTFE powder, 3 to 30 % by weight of a heat resistant aromatic polyoxybenzoyl ester resin powder and 3 to 30 % by weight of a graphite powder.

It is preferable that the PTFE powder is a modified PTFE powder and the graphite powder is a natural graphite powder.

The seal ring of the present invention can exhibit its properties particularly as a seal ring for a valve device of a power steering of automobiles.

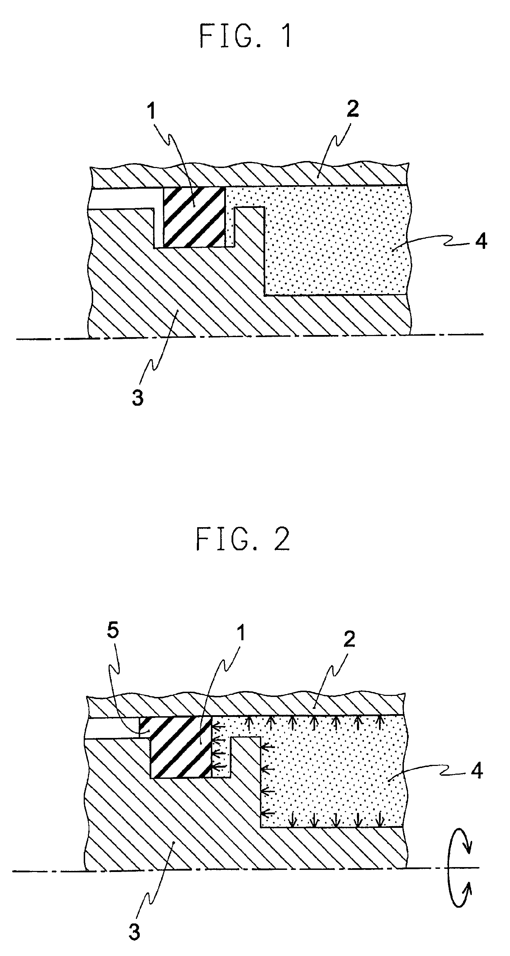

The valve device of a power steering of automobiles is composed of the housing 2, the seal ring set body 3 and the seal ring 1 which is made of a resin and is present between the housing 2 and the seal ring set body 3 for sealing of oil 4 as shown in Fig. 1, and the seal ring 1 is characterized by comprising a PTFE resin composition comprising 40 to 94 % by weight of a PTFE powder, 3 to 30 % by weight of a heat resistant aromatic polyoxybenzoyl ester resin powder and 3 to 30 % by weight of a graphite powder.

Also the present invention relates to a seal ring in which when a sliding cycle is applied on the seal ring under the following Condition 1 which is a normal test condition for evaluating durability of a seal ring, breakage of the seal ring does not occur at the 200,000th cycle, a sliding torque within the period of 200,000 cycles without the period of initial unstable sliding torque is not less than 75 % of the maximum sliding torque in that period of 200,000 cycles, and an abraded depth of an opposite material after 200,000 cycles is not more than 15 µm.

### (Condition 1)

Test equipment: Test equipment for evaluating durability of a seal ring which conforms with a rack & pinion type power steering device
Oil pressure: 12 MPa
Oil temperature: 120°C
Kind of oil: Power steering fluid
Cycle: One cycle consists of a normal rotation at 95 rpm for 2 seconds and a reverse rotation at 95 rpm for 2 seconds
Opposite material: Aluminum die cast (JIS H5302)
Seal ring-mounting material: Carbon steel (JIS G4051)
Seal ring: 36.4 mm of outer diameter, 1.5 mm of width, 1.80 mm of height

In the present invention, the test for evaluating durability of the seal ring is carried out using the seal ring having the above-mentioned form (36.4 mm of outer diameter, 1.5 mm of width, 1.80 mm of height) which is generally used in Japan. Besides that, there is a case where other forms are used, namely 36.2 mm of outer diameter × 1.25 mm of width × 1.83 mm of height and 38.4 mm of outer diameter × 1.45 mm of width × 2.00 mm of height. Even when the seal rings having those forms are used, nearly the same measuring results can be obtained irrespective of a difference in the forms.

The test equipment for evaluating durability of a seal ring has a structure conforming with a valve device (actual device) of a power steering which is actually used on automobiles. The structure conforming with an actual device means that the structures of a seal ring-mounting portion and a sliding portion are the same as in the actual device (hereinafter the same with respect to other test equipment). As far as a rack & pinion type power steering is used on the valve device for a power steering of automobiles, since the devices have the same structures with respect to the seal ring-mounting portion and the sliding portion irrespective of types of automobiles, properties of the seal ring which are obtained in an actual device can be obtained and evaluated using the above-mentioned test equipment. A cross-section of the actual valve device is shown in Fig. 5 (a) of "ENGINEERING JOURNAL No. 148, pg. 92 (1995)" published by Koyo Seiko Co., Ltd.

Also the present invention relates to a seal ring for a valve device of a power steering of a large-sized car, in which an oil pressure of the valve device is not less than 12 MPa and the seal ring is required to undergo a small torque change at a high oil pressure.

When a sliding cycle is applied on such a seal ring of a power steering of a large-sized car under the following Condition 2, breakage of the seal ring does not occur at the 200,000th cycle, a sliding torque within the period of 200,000 cycles without the period of initial unstable sliding torque is not less than 75 % of the maximum sliding torque in that period of 200,000 cycles, and during the period of 200,000 cycles without the period of initial unstable sliding torque, a ratio Tmax15/Tmax12 of the maximum sliding torque Tmax15 at an oil pressure of 15 MPa to the maximum sliding torque Tmax12 at an oil pressure of 12 MPa is less than 1.5.

### (Condition 2)

Test equipment: Test equipment for evaluating durability of a seal ring which conforms with a rack & pinion type power steering device
Oil pressure: 12 MPa and 15 MPa
Oil temperature: 120°C
Kind of oil: Power steering fluid
Cycle: One cycle consists of a normal rotation at 95 rpm for 2 seconds and a reverse rotation at 95 rpm for 2 seconds
Opposite material: Carbon steel (JIS G3445)
Seal ring-mounting material: Carbon steel (JIS G4051)
Seal ring: 36.4 mm of outer diameter, 1.5 mm of width, 1.80 mm of height

Also the seal ring of the present invention is suitable as a seal ring for an automatic transmission.

The automatic transmission device is composed of the housing 2, the seal ring set body 3 and the seal ring 1 which is made of a resin and is present between the housing 2 and the seal ring set body 3 for sealing of oil 4, and the seal ring 1 is characterized by comprising a PTFE resin composition comprising 40 to 94 % by weight of a PTFE powder, 3 to 30 % by weight of a heat resistant aromatic polyoxybenzoyl ester resin powder and 3 to 30 % by weight of a graphite powder.

When a rotation slide is applied on such a seal ring for an automatic transmission under the following Condition 3, breakage of the seal ring does not occur in 500 hours, and an abraded depth of an opposite material 500 hours after applying the rotation slide is not more than 10 µm.

### (Condition 3)

Test equipment: Test equipment for evaluating durability of a seal ring which conforms with an automatic transmission device
Oil pressure: 2 MPa
Oil temperature: 120°C
Kind of oil: Automatic transmission fluid
Number of rotations: 8,000 rpm
Opposite material: Aluminum die cast (JIS H5302)
Seal ring-mounting material: Cast iron (JIS G5501)
Seal ring: 50 mm of outer diameter, 2 mm of width, 2 mm of height

Further the seal ring of the present invention is suitable as a seal ring for a shock absorber in which a reciprocating slide (stroke) is applied at a high number of strokes.

The shock absorber device is composed of the cylinder 8, the piston 7 and the seal ring 1 which is made of a resin and is present between the cylinder 8 and the piston 7 for sealing of oil 4, and the seal ring 1 is characterized by comprising a PTFE resin composition comprising 40 to 94 % by weight of a PTFE powder, 3 to 30 % by weight of a heat resistant aromatic polyoxybenzoyl ester resin powder and 3 to 30 % by weight of a graphite powder.

When the reciprocating slide strokes are applied on such a seal ring for a shock absorber under the following Condition 4, breakage of the seal ring does not occur at the 5,000,000th stroke, the maximum slide resistance Fmax within the period of 5,000,000 strokes without the period of initial unstable slide resistance is less than 1.5 times the minimum slide resistance Fmin during that period of 5,000,000 strokes, and an amount of oil leakage after 5,000,000 strokes is not more than 15 ml.

### (Condition 4)

Test equipment: Test equipment for evaluating durability of a seal ring which conforms with a shock absorber device
Oil pressure: 10 MPa
Oil temperature: 100°C
Kind of oil: Shock absorber oil
Length of stroke: 60 mm
Vibration frequency to be applied: 3 Hz
Opposite material: Carbon steel (JIS G4051)
Seal ring-mounting material: Cast iron (JIS G5501)
Seal ring: 28.5 mm of outer diameter, 7.4 mm of width, 0.8 mm of height (diameter of piston: 25 mm)

### BRIEF DESCRIPTION OF DRAWINGS

Fig. 1 is a partial diagrammatic cross-sectional view of the seal ring of the present invention mounted on a power steering device or an automatic transmission device.
Fig. 2 is a partial diagrammatic cross-sectional view showing a usual deformation of the seal ring which arises when the device shown in Fig. 1 is rotated.

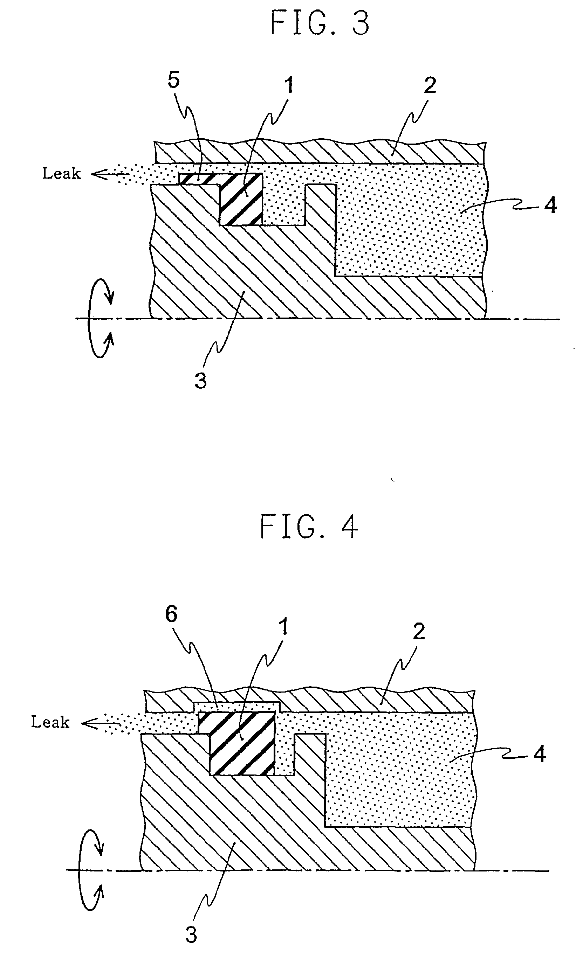

Fig. 3 is a partial diagrammatic cross-sectional view showing a state of damage of the seal ring which arises when the device shown in Fig. 1 is rotated.
Fig. 4 is a partial diagrammatic cross-sectional view showing a condition of abrasion of the opposite material (housing) to the seal ring which arises when the device shown in Fig. 1 is rotated.
Fig. 5 is a partial diagrammatic cross-sectional view of the seal ring of the present invention mounted on a shock absorber device.
Fig. 6 is a partial diagrammatic cross-sectional view showing a condition of abrasion of the seal ring and the opposite material (cylinder) which arises when the device shown in Fig. 5 is subjected to reciprocating motion.

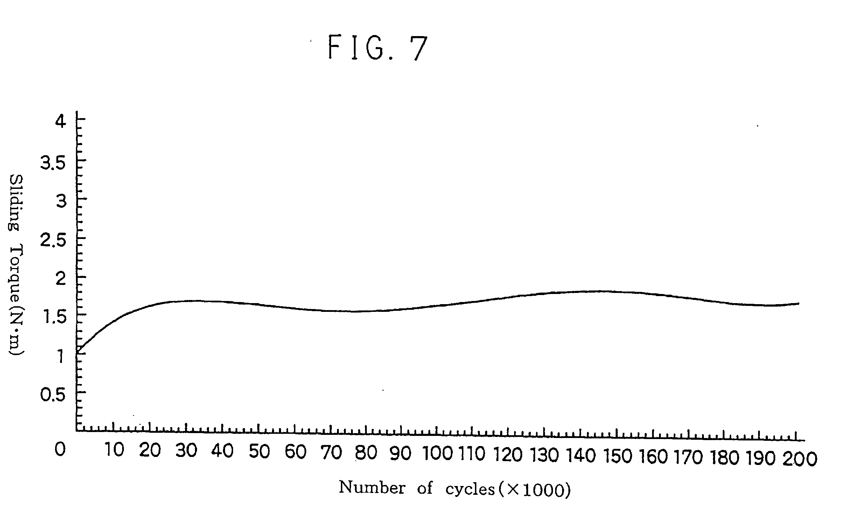

Fig. 7 is a graph showing a change in a sliding torque of the seal ring of Example 1 used in the durability test.

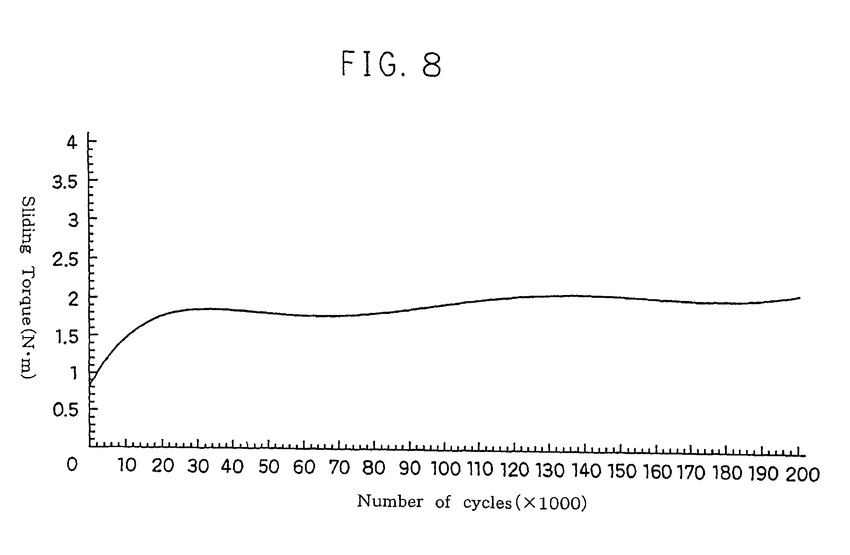

Fig. 8 is a graph showing a change in a sliding torque of the seal ring of Example 2 used in the durability test.

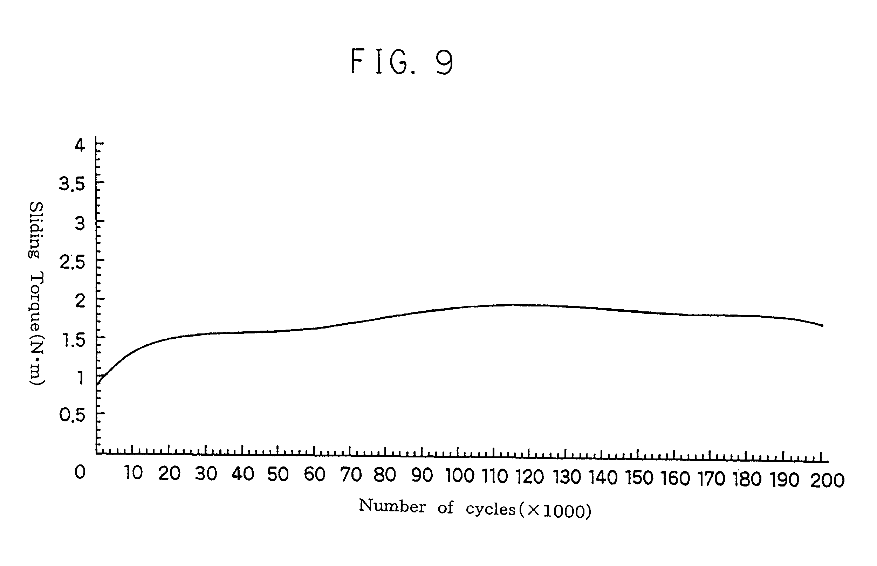

Fig. 9 is a graph showing a change in a sliding torque of the seal ring of Example 3 used in the durability test.

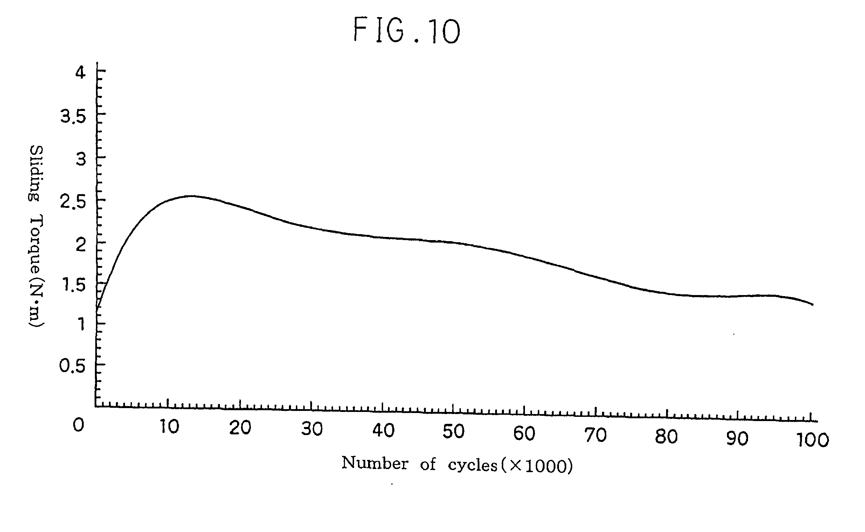

Fig. 10 is a graph showing a change in a sliding torque of the seal ring of Comparative Example 1 used in the durability test.

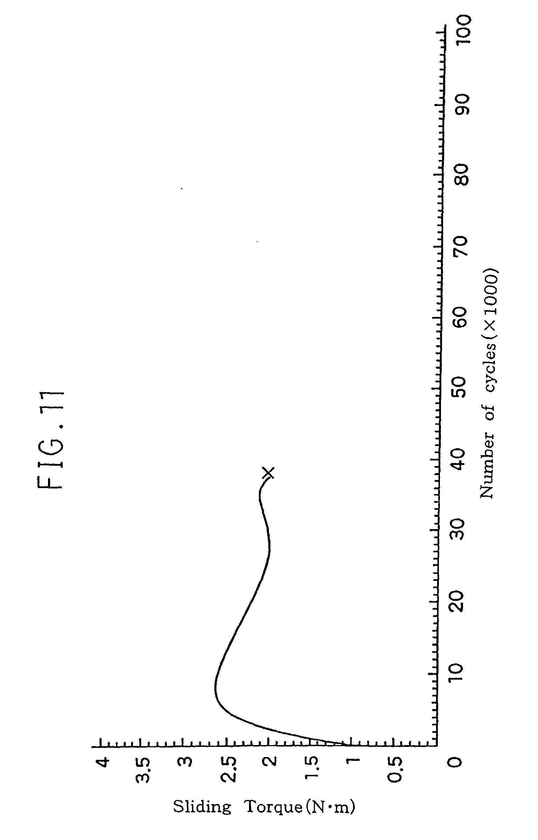

Fig. 11 is a graph showing a change in a sliding torque of the seal ring of Comparative Example 2 used in the durability test.

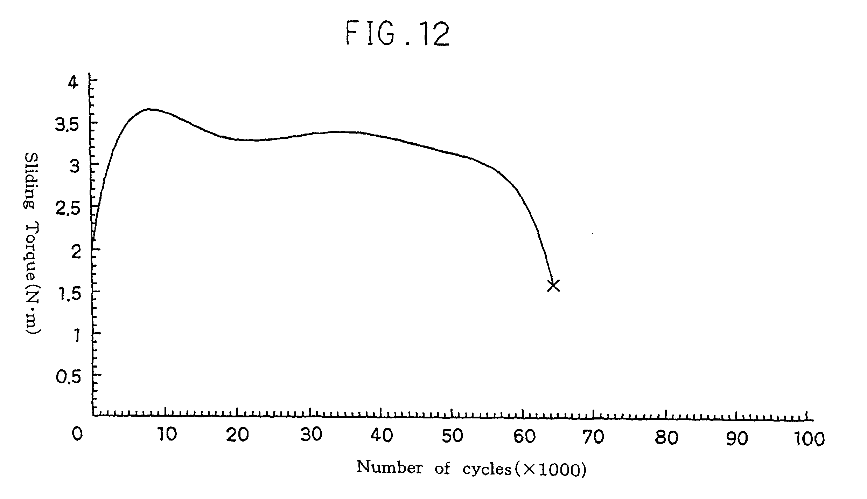

Fig. 12 is a graph showing a change in a sliding torque of the seal ring of Comparative Example 3 used in the durability test.

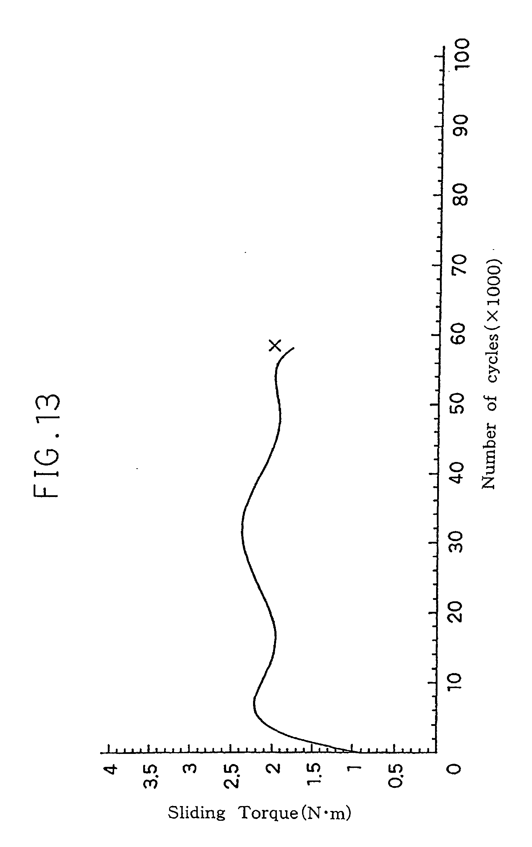

Fig. 13 is a graph showing a change in a sliding torque of the seal ring of Comparative Example 4 used in the durability test.

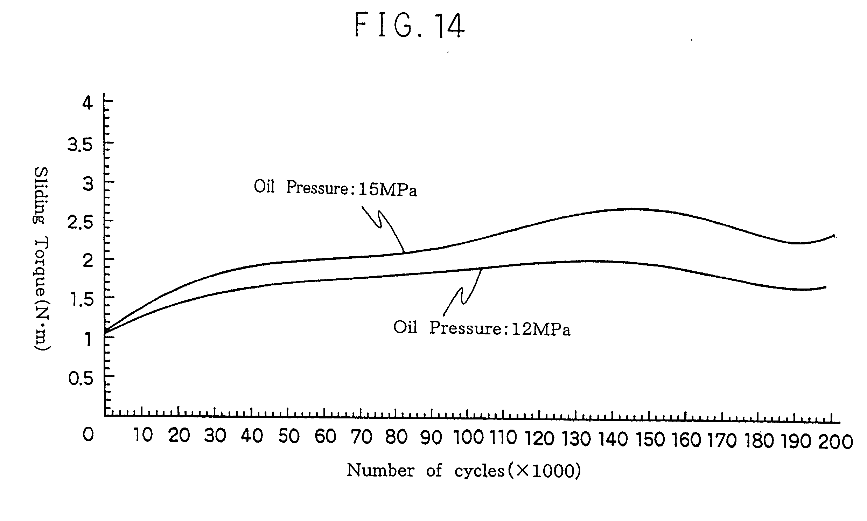

Fig. 14 is a graph showing a change in a sliding torque at the oil pressures of 12 MPa and 15 MPa of the seal ring of Example 4 used in the durability test.

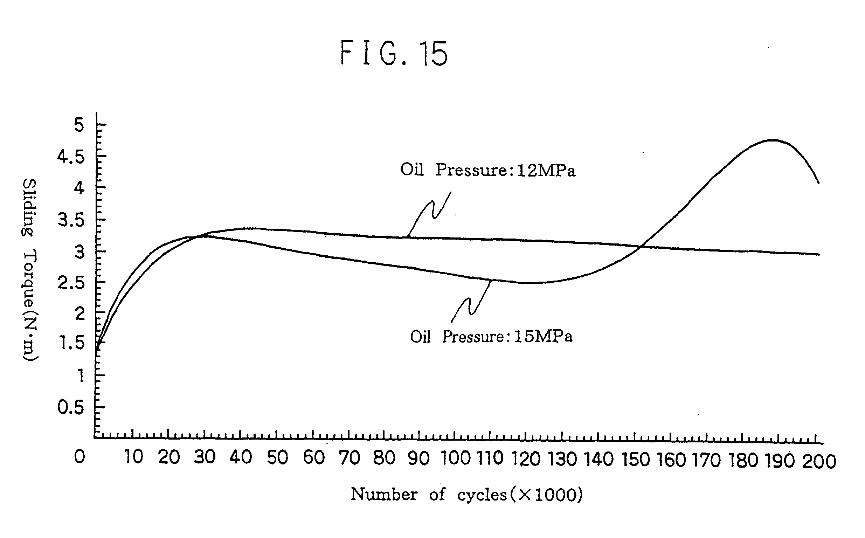

Fig. 15 is a graph showing a change in a sliding torque at the oil pressures of 12 MPa and 15 MPa of the seal ring of Comparative Example 5 used in the durability test.

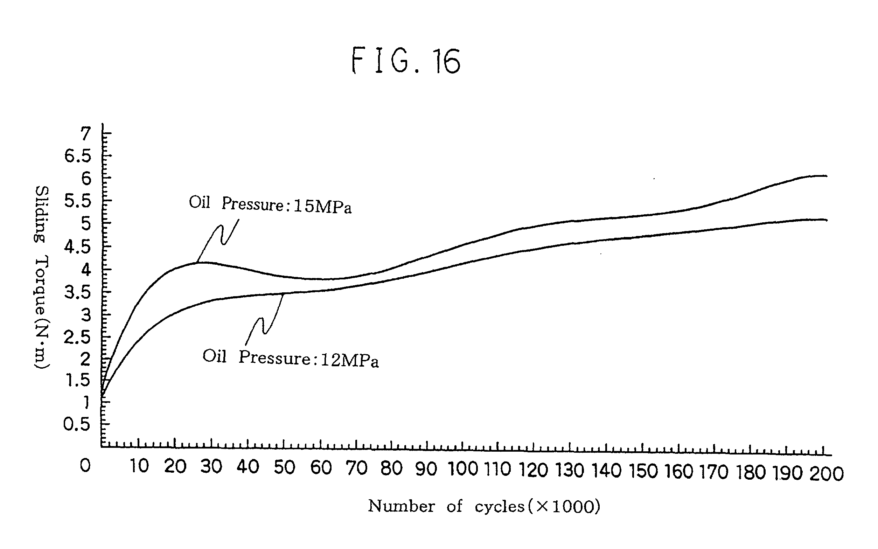

Fig. 16 is a graph showing a change in a sliding torque at the oil pressures of 12 MPa and 15 MPa of the seal ring of Comparative Example 6 used in the durability test.

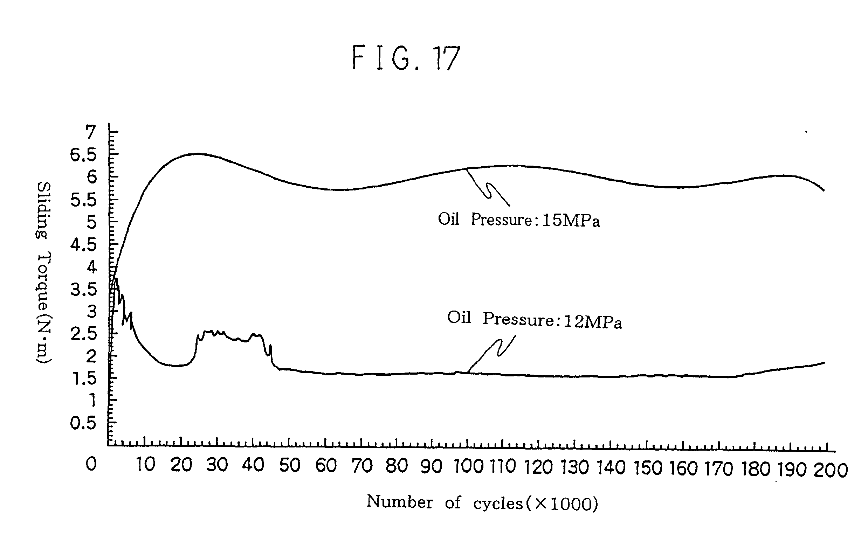

Fig. 17 is a graph showing a change in a sliding torque at the oil pressures of 12 MPa and 15 MPa of the seal ring of Comparative Example 7 used in the durability test.

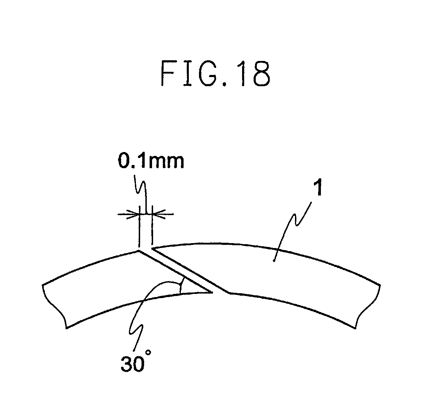

Fig. 18 is a diagrammatic plane view of a cut portion of the seal ring of Example 5 for the automatic transmission device used in the durability test.

### BEST MODE FOR CARRYING OUT THE INVENTION

In the present invention, the PTFE powder may be a tetrafluoroethylene homopolymer or PTFE modified with a monomer copolymerizable with tetrafluoroethylene, and preferred is the modified PTFE powder from the viewpoint of excellent heat resistance, chemical resistance and creep resistance.

Examples of the modified PTFE are, for instance, those which are not melt-moldable and contain from 0.001 to 1 % by weight of a perfluoro vinyl ether unit represented by the formula (1):

-CF₂-CF(-O-X)- (1)

wherein X is a perfluoroalkyl group having 1 to 6 carbon atoms or a perfluoroalkoxyalkyl group having 4 to 9 carbon atoms.

Examples of the perfluoro vinyl ether are, for instance, perfluoro(alkyl vinyl ethers) such as perfluoro(methyl vinyl ether) (PMVE), perfluoro(ethyl vinyl ether) (PEVE), perfluoro(propyl vinyl ether) (PPVE) and perfluoro(butyl vinyl ether) (PBVE).

The average particle size of the PTFE powder is from 10 to 120 µm, preferably from 10 to 50 µm.

In the present invention, for example, a powder of a resin having a structural unit (I): 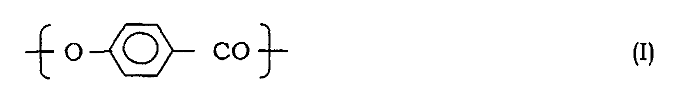 is preferred as the heat resistant aromatic polyoxybenzoyl ester resin powder from the viewpoint of excellent heat resistance, chemical resistance and abrasion resistance. In addition to the structural unit (I), the resin powder may have the structural unit (II) and/or (III): 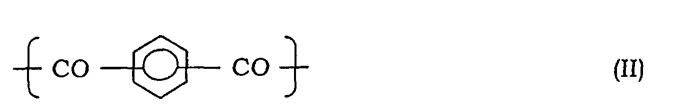 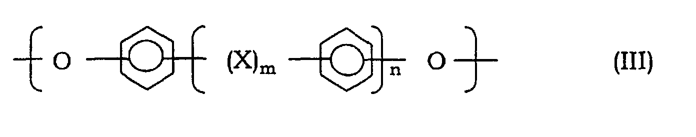 wherein X is -O-, m is 0 or 1, n is 0 or 1. Examples of commercially available resin powder are, for instance, SUMICA SUPER (available from Sumitomo Chemical Company, Limited), EKONOL (available from Carborandom Co., Ltd.), etc. It is preferable that the average particle size is from 1 to 300 µm, more preferably from 5 to 150 µm, particularly preferably from 10 to 50 µm from the viewpoint of good dispersibility of the resin powder and excellent strength of the obtained seal ring.

The heat resistant aromatic polyoxybenzoyl ester resin powder may be subjected to surface treatment with a silane coupling agent or various water repelling treatments.

Examples of the graphite powder are, for instance, natural graphite, artificial graphite, expanded graphite, graphite fluoride, spherical carbon, carbon fluoride, graphite whisker, etc. Particularly preferred is a natural graphite powder. It is preferable that the average particle size of the graphite powder is from 0.1 to 500 µm, particularly preferably from 5 to 20 µm.

The proportion (% by weight) of PTFE powder, heat resistant aromatic polyoxybenzoyl ester resin powder and graphite powder is 40 to 94/3 to 30/3 to 30 (100 % by weight in total), preferably 70 to 90/5 to 15/5 to 15, particularly preferably 75 to 90/5 to 15/5 to 10. If the amount of the heat resistant aromatic polyoxybenzoyl ester resin powder is too large, inherent properties of the PTFE are lowered, and if the amount is too small, abrasion resistance is lowered. If the amount of the graphite powder is too large, the opposite material made of a soft metal such as aluminum is easily damaged, and if the amount of the graphite powder is too small, durability is lowered.

In the present invention, only two kinds of fillers, i.e. heat resistant aromatic polyoxybenzoyl ester resin powder and graphite powder suffice, and so far as the intended effect of the present invention is not lowered, other fillers may be blended.

The above-mentioned powders are mixed by usual method, and if required, are granulated to be formed into a resin powder for molding into a seal ring and are molded into the seal ring by various known molding methods, for example, compression molding method, ram extrusion molding method, isostatic molding method, hot coining molding method, etc. In any of those molding methods, the molded article is finally subjected to sintering. In the present invention, the sintering temperature is from 323° to 400°C, preferably from 350° to 385°C.

The thus obtained seal ring satisfies the following characteristics under the above-mentioned test Condition 1.
(A) Breakage of the seal ring does not occur at the 200,000th sliding cycle.
(B) A sliding torque during the period of time of from the 10,000th cycle to the 200,000th cycle is within the range of not less than 75 %, preferably not less than 80 % of the maximum sliding torque in that period.
(C) An abraded depth of the opposite material after 200,000 cycles is not more than 15 µm, preferably not more than 10 µm, particularly preferably not more than 5 µm.

The seal ring having all of those three characteristics is an epoch-making seal ring markedly exceeding the limit of conventional seal rings.

With respect to large-sized cars such as trucks and special cars such as power shovel and bulldozer, a high oil pressure is applied on the valve of a large size power steering when a steering wheel is turned around. In order to turn the steering wheel smooth when such a high oil pressure is applied, it is desirable that a change in a sliding torque is small against a large change in oil pressure.

The seal ring of the present invention can be used on such a large power steering. When the sliding cycle is applied on the seal ring under the above-mentioned Condition 2, breakage of the seal ring does not occur at the 200,000th cycle, the sliding torque within the period of 200,000 cycles without the period of initial unstable sliding torque is not less than 75 %, preferably not less than 80 % of the maximum sliding torque in that period of 200,000 cycles, and during the period of 200,000 cycles without the period of initial unstable sliding torque, a ratio Tmax15/Tmax12 of the maximum sliding torque Tmax15 at an oil pressure of 15 MPa to the maximum sliding torque Tmax12 at an oil pressure of 12 MPa is less than 1.5, preferably not more than 1.3.

The meaning of "without the period of initial unstable sliding torque" is that in the sliding test under a high pressure, until about 50,000 cycles are reached from starting of the sliding, the sliding torque does not become stable and sometimes the sliding torque increases drastically and therefore such an initial unstable sliding torque is excluded.

Examples of devices on which the seal ring of the present invention is used are a hydraulic power steering device, automatic transmission, engine piston ring and shock absorber for automobiles and a hydraulic cylinder for industrial machinery. Among them, the seal ring is suitable for a valve device of a power steering of automobiles which is particularly required to have characteristics such as a small resistance at sliding, a less abrasion of the opposite material, a small deformation of the seal ring under a high pressure (not less than 8 MPa), and a less leakage of oil even in case of the use for a long period of time.

Further the seal ring which is small in a change of a sliding torque can be provided for a valve device of a large power steering of large cars (truck, bus, trailer, etc.) though there have been no seal rings for the large cars having stable sliding characteristics even under a high pressure.

Also the seal ring of the present invention is suitable as a seal ring for an automatic transmission and shock absorber in which importance is attached to safety and durability is required.

Namely, the present invention can provide the seal ring for an automatic transmission in which when a rotating slide is applied on the seal ring under the above-mentioned Condition 3, breakage of the seal ring does not occur in 500 hours and the abraded depth of the opposite material 500 hours after applying the rotating slide is not more than 10 µm, preferably not more than 5 µm.

Further the present invention can provide the seal ring for a shock absorber in which when the reciprocating slide strokes are applied on the seal ring under the above-mentioned Condition 4, breakage of the seal ring does not occur at the 5,000,000th stroke, the maximum slide resistance Fmax within the period of 5,000,000 strokes without the period of initial unstable slide resistance is less than 1.5 times, preferably not more than 1.3 times the minimum slide resistance Fmin during that period of 5,000,000 strokes, and an amount of oil leakage after 5,000,000 strokes is not more than 15 ml, preferably not more than 10 ml.

The present invention is then explained by means of examples, but is not limited to them.

### EXAMPLE 1

The resin powder for molding was prepared by pre-mixing 80 parts by weight of a PTFE powder (average particle size: 30 µm) modified with 1 % by weight of perfluoro(propyl vinyl ether), 15 parts by weight of a heat resistant aromatic polyoxybenzoyl ester resin powder (SUMICA SUPER available from Sumitomo Chemical Company, Limited, average particle size: 20 µm) and 5 parts by weight of a natural graphite (CPB-3000 available from Chuetsu Kokuen Kabushiki Kaisha, average particle size: 9 µm) and then granulating the mixture.

The obtained resin powder for molding was subjected to compression molding to obtain a seal ring for testing (a ring of inner diameter: 33.4 mm, outer diameter: 36.4 mm, height: 1.8 mm). The seal ring for testing was subjected to testing for durability under the above-mentioned Condition 1. The results are shown in Table 1.

### Test method

Test equipment: Test equipment for evaluating durability of a seal ring which conforms with a rack & pinion type power steering device
Oil pressure: 12 MPa
Oil temperature: 120°C
Kind of oil: Power steering fluid (RODEO PSF available from Nippon Mitsubishi Oil Corporation)
Sliding cycle: One cycle consists of a normal rotation at 95 rpm for 2 seconds and a reverse rotation at 95 rpm for 2 seconds
Opposite material: Aluminum die cast ADC12 (JIS H5302)
Seal ring-mounting material: Carbon steel S45C (JIS G4051)
Seal ring: 36.4 mm of outer diameter, 1.5 mm of width, 1.8 mm of height

### Evaluation of properties

### (Life of seal ring)

The number of sliding cycles where there occurs breakage of the seal ring (oil leakage) is assumed to be a life of the seal ring. The test is suspended when the breakage of the seal ring does not occur at the 200,000th cycle.

### (Change in sliding torque)

A rotation torque is recorded when two seal rings which seal oil are rotating at 95 rpm (2 seconds). A change in a rotation torque during the period of time of from an end of an initial drastic increase of the torque (7,000 to 25,000 cycles) to the 200,000th cycle is assumed to be a change in a sliding torque.

The results of measurement are shown in the graph (Fig. 7) in which the abscissa represents the sliding cycle and the ordinate represents the sliding torque (N·m).

Further the maximum sliding torque Tmax and the minimum sliding torque Tmin during the period of time of from the 10,000th cycle to the 200,000th cycle are determined, and a maximum change in the sliding torque is represented by (Tmin/Tmax) × 100 (%).

### (Maximum abraded depth of opposite material)

The maximum depth (µm) at the abraded portion (corresponding to the concave portion 6 in Fig. 4) of the opposite material (aluminum die cast) is measured when breakage of the seal ring occurs or when the test is suspended at the 200,000th cycle, by using a surface roughness meter (SURFTEST SV-600 available from Mitsutoyo Kabushiki Kaisha).

### (Amount of extrusion of seal ring)

A length (mm) of an extruded portion (corresponding to an extruded portion 5 in Figs. 2 and 3) of the seal ring is measured when the test is suspended at the 200,000th cycle. The seal rings broken (or subject to oil leak) during the test are excluded.

### (Final shape of cross-section)

When the breakage of the seal ring (oil leak) occurs or when the test is suspended at the 200,000th cycle, the seal ring is cut and a shape of its cross-section is evaluated.

### EXAMPLES 2 to 3

The seal rings of the present invention were produced by molding in the same manner as in Example 1 except that the amounts of the heat resistant aromatic polyoxybenzoyl ester resin powder and graphite powder were changed as shown in Table 1, and the durability of the seal rings was evaluated in the same manner as in Example 1. The results are shown in Table 1 and Figs. 8 and 9 (graphs showing a change in a sliding torque).

### COMPARATIVE EXAMPLES 1 to 4

The seal rings for comparison were produced by granulating and molding in the same manner as in Example 1 except that the fillers shown in Table 1 were used, and the durability of the seal rings was evaluated in the same manner as in Example 1. The results are shown in Table 1 and Figs. 10 to 13 (graphs showing a change in a sliding torque).

Abbreviations of the fillers shown in Table 1 (the same in Tables 2 to 4) are as follows.
POB: Heat resistant aromatic polyoxybenzoyl ester resin powder
(SUMICA SUPER available from Sumitomo Chemical Company, Limited, average particle size: 20 µm)
GR: Natural graphite powder (CPB-3000 available from Chuetsu Kokuen Kabushiki Kaisha, average particle size: 9 µm)
CF: Carbon fiber (M2006S available from Kabushiki Kaisha Kureha, average fiber diameter: 15 µm, average fiber length: 100 µm)
GRA: Artificial graphite powder (EG-1C available from Nippon Carbon Kabushiki Kaisha, average particle size: 35 µm)
BZ: Bronze powder (SD-200 available from Fukuda Kinzoku Kabushiki Kaisha, average particle size: 20 µm)
PI: Polyimide powder (KELIMIDE 1050 available from Asahi Chiba Kabushiki Kaisha, average particle size: 20 µm)

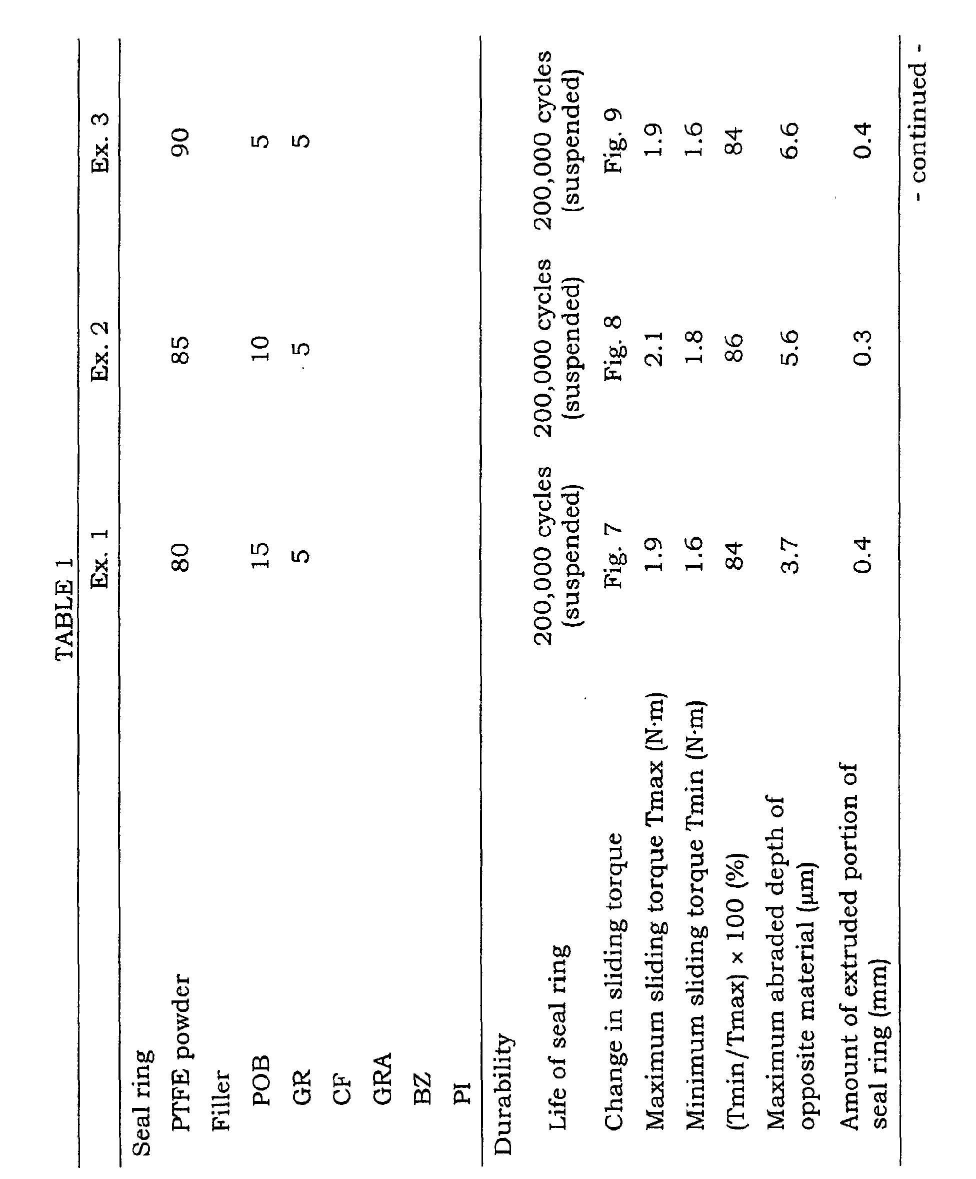

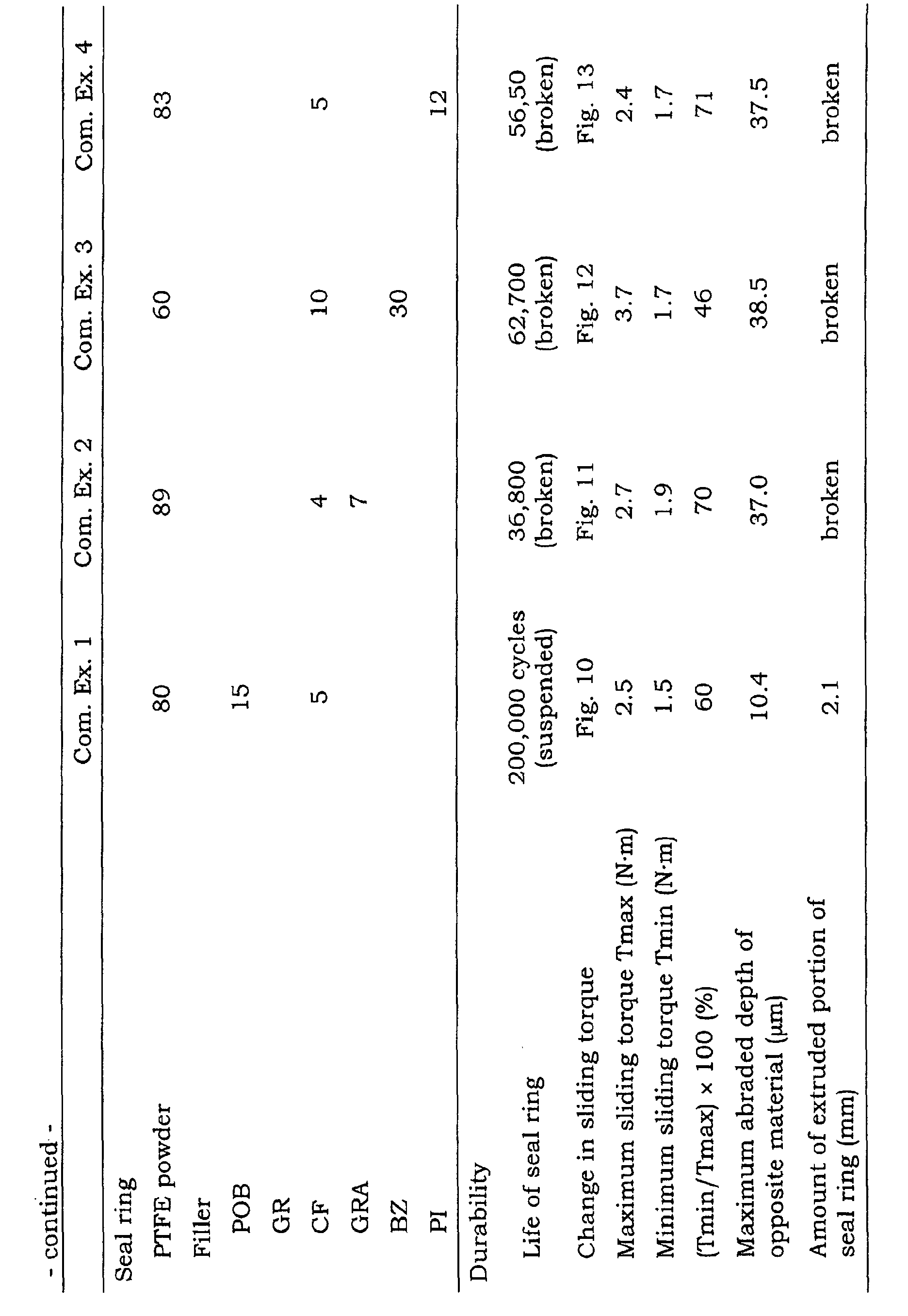

### EXAMPLE 4

A life of seal ring, a change in a sliding torque (same oil pressure), a maximum sliding torque (Tmax), a minimum sliding torque (Tmin) and Tmin/Tmax × 100 (%) were measured in the same manner as in Example 1 by applying oil pressures of 12 MPa and 15 MPa on the seal ring produced in Example 3 (90 parts of PTFE powder + 5 parts of POB + 5 parts of natural graphite) under the above-mentioned test Condition 2 (opposite material: carbon steel STKM13 (JIS G3445) was used). Further a ratio (Tmax15/Tmax12) of a maximum sliding torque (Tmax15) at an oil pressure of 15 MPa to a maximum sliding torque (Tmax12) at an oil pressure of 12 MPa was calculated.

The results are shown in Table 2 and Fig. 14 (graph showing a change in a sliding torque).

### COMPARATIVE EXAMPLES 5 to 7

The seal rings were produced by using the components shown in Table 2, and a life of seal ring, a change in a sliding torque (same oil pressure), a maximum sliding torque (Tmax), a minimum sliding torque (Tmin) and Tmin/Tmax × 100 (%) were measured in the same manner as in Example 4 at oil pressures of 12 MPa and 15 MPa under Condition 2. Further a ratio (Tmax15/Tmax12) of a maximum sliding torque (Tmax15) at an oil pressure of 15 MPa to a maximum sliding torque (Tmax12) at an oil pressure of 12 MPa was calculated.

The results are shown in Table 2 and Figs. 15 to 17 (graphs showing a change in a sliding torque).

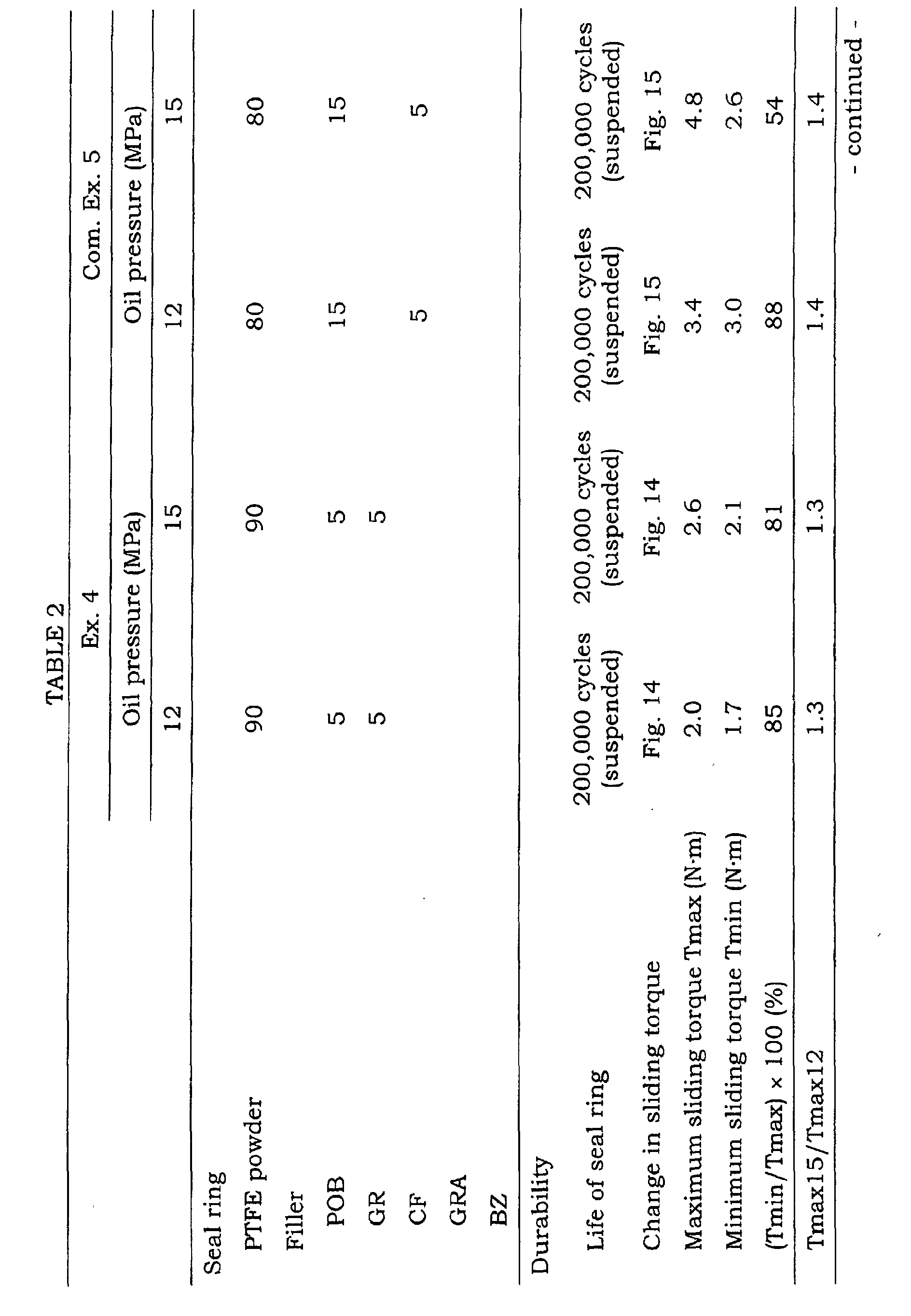

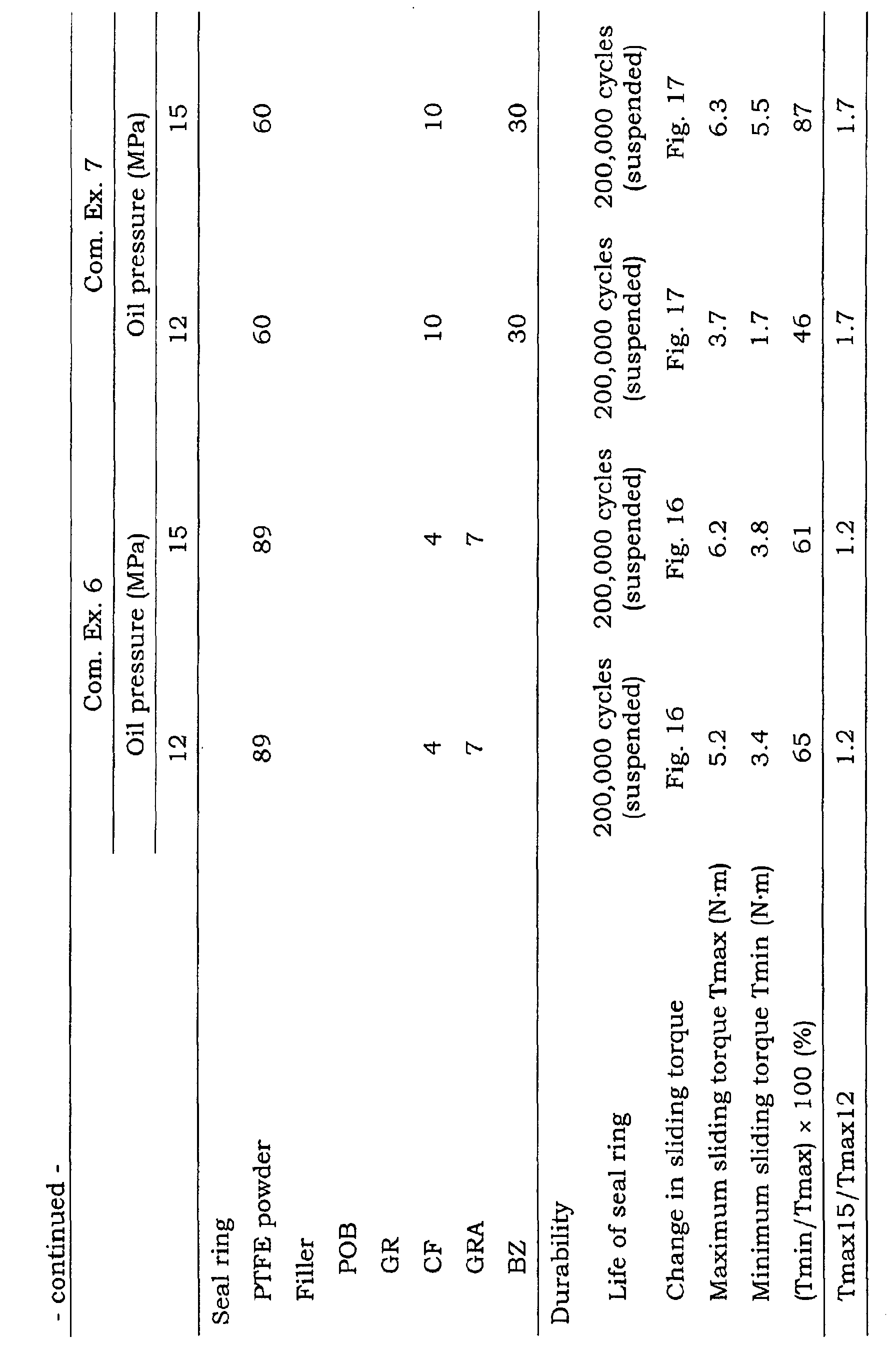

### EXAMPLE 5

The resin powder for molding was prepared by pre-mixing 80 parts by weight of a PTFE powder (average particle size: 30 µm) modified with 1 % by weight of perfluoro(propyl vinyl ether), 15 parts by weight of a heat resistant aromatic polyoxybenzoyl ester resin powder (SUMICA SUPER available from Sumitomo Chemical Company, Limited, average particle size: 20 µm) and 5 parts by weight of a natural graphite (CPB-3000 available from Chuetsu Kokuen Kabushiki Kaisha, average particle size: 9 µm) and then granulating the mixture.

The obtained resin powder for molding was subjected to compression molding to obtain a seal ring for testing (The ring had an inner diameter of 46 mm, an outer diameter of 50 mm and a thickness of 2 mm and was cut at one portion thereof at an angle of 30 degrees to a tangential line. A gap of the cut portion was 0.1 mm. Refer to Fig. 18.). The seal ring for testing was subjected to testing for durability under the above-mentioned Condition 3. The results are shown in Table 3.

### Test method

Test equipment: Test equipment for evaluating durability of a seal ring which conforms with an automatic transmission device
Oil pressure: 2 MPa
Oil temperature: 120°C
Kind of oil: Automatic transmission fluid (ATF D4 available from Nippon Mitsubishi Oil Corporation)
Number of rotations 8,000 rpm
Opposite material: Aluminum die cast ADC12 (JIS H5302)
Seal ring-mounting material: Cast iron FC205 (JIS G5501)
Seal ring: 50 mm of outer diameter, 2 mm of width, 2 mm of height

### Evaluation of properties

### (Life of seal ring)

The sliding cycle when breakage of the seal ring (oil leakage) occurs is assumed to be a life of the seal ring. The test is suspended when the breakage of the seal ring does not occur in 500 hours.

### (Maximum abraded depth of opposite material)

The maximum depth (µm) at the abraded portion (corresponding to the concave portion 6 in Fig. 4) of the opposite material (aluminum die cast) is measured at the time when breakage of the seal ring occurs or when the test is suspended in 500 hours, by using a surface roughness meter (SURFTEST SV-600 available from Mitsutoyo Kabushiki Kaisha).

### EXAMPLES 6 to 7

The seal rings of the present invention were produced by molding in the same manner as in Example 5 except that the amounts of the heat resistant aromatic polyoxybenzoyl ester resin powder and graphite powder were changed as shown in Table 3, and the durability of the seal rings was evaluated in the same manner as in Example 5. The results are shown in Table 3.

### COMPARATIVE EXAMPLES 8 to 11

The seal rings for comparison were produced by granulating and molding in the same manner as in Example 5 except that the fillers shown in Table 3 were used, and the durability of the seal rings was evaluated in the same manner as in Example 5. The results are shown in Table 3.

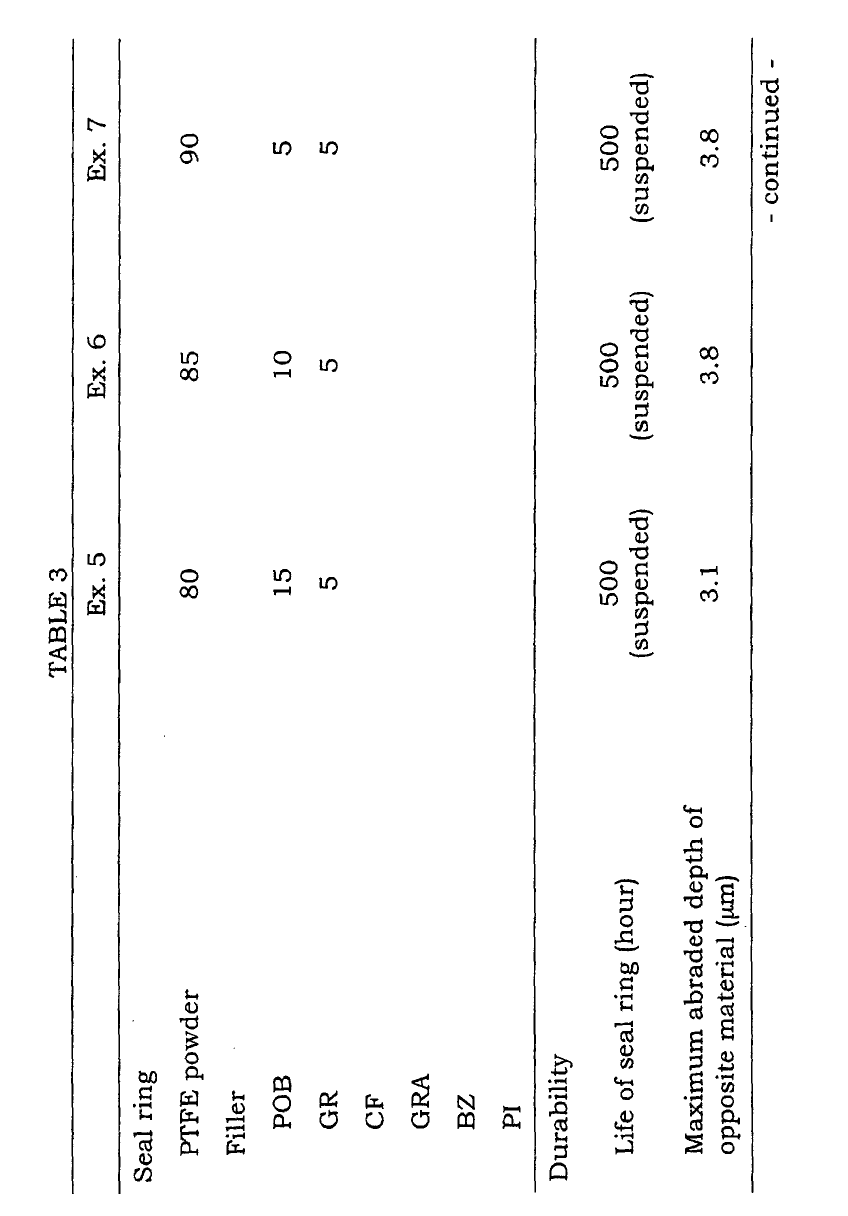

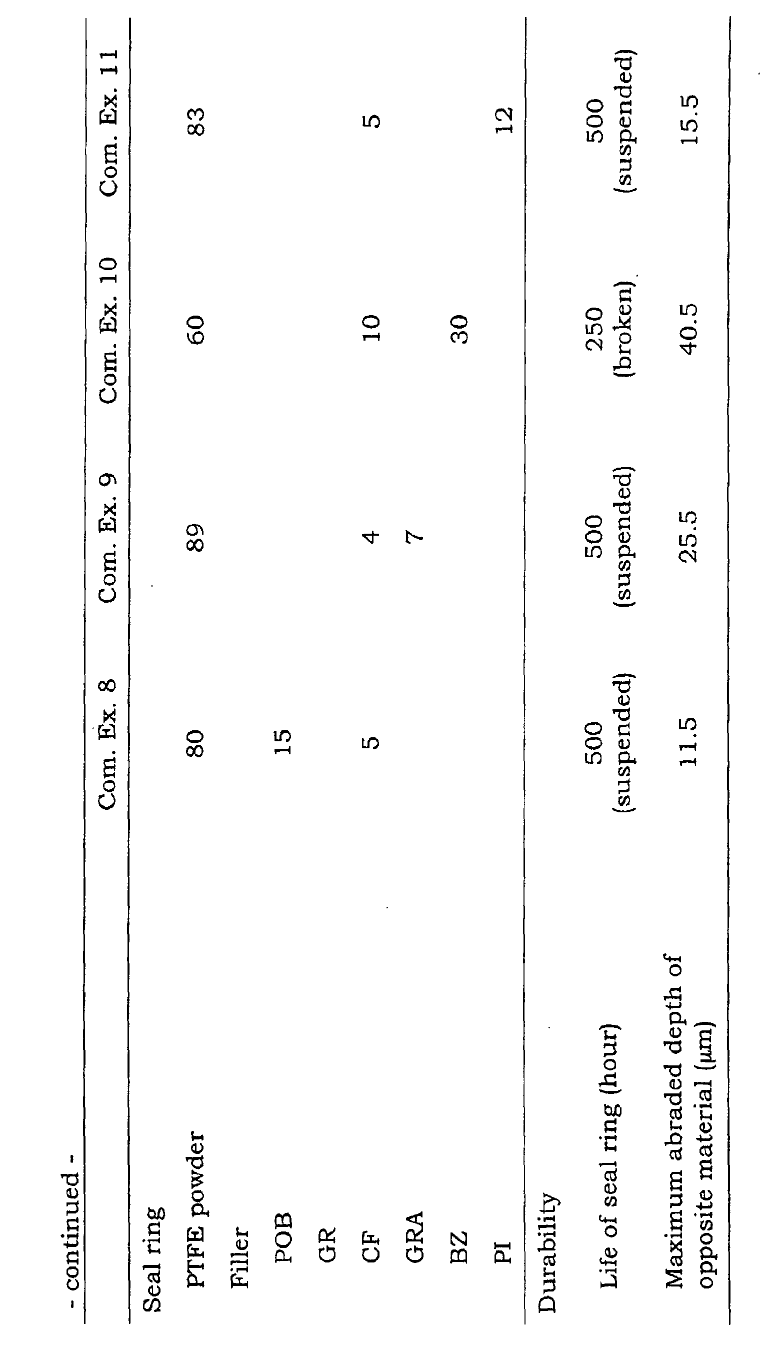

### EXAMPLE 8

The resin powder for molding was prepared by pre-mixing, by usual method, 80 parts by weight of a PTFE powder (average particle size: 30 µm) modified with 1 % by weight of perfluoro(propyl vinyl ether), 15 parts by weight of a heat resistant aromatic polyoxybenzoyl ester resin powder (SUMICA SUPER available from Sumitomo Chemical Company, Limited, average particle size: 20 µm) and 5 parts by weight of a natural graphite (CPB-3000 available from Chuetsu Kokuen Kabushiki Kaisha, average particle size: 9 µm) and then granulating the mixture.

The obtained resin powder for molding was subjected to compression molding to obtain a seal ring for testing (a ring of inner diameter: 13.7 mm, outer diameter: 28.5 mm, thickness: 0.8 mm). The seal ring for testing was subjected to testing for durability under the above-mentioned Condition 4. The results are shown in Table 4.

### Test method

Test equipment: Test equipment for evaluating durability of a seal ring which conforms with a shock absorber device
Inner diameter of piston: 25 mm
Oil pressure: 10 MPa
Oil temperature: 100°C
Kind of oil: Shock absorber oil
Length of stroke: 60 mm. One reciprocation is assumed to be one stroke.
Vibration frequency to be applied: 3 Hz
Opposite material: Carbon steel S45C (JIS H4051)
Seal ring-mounting material: Cast iron FC250 (JIS G5501)
Seal ring: 28.5 mm of outer diameter, 7.4 mm of width, 0.8 mm of height
(diameter of piston: 25 mm)

### Evaluation of properties

### (Life of seal ring)

The number of sliding strokes when breakage of the seal ring occurs (in a state that oil leaks and an oil pressure cannot be maintained) is assumed to be a life of seal ring. The test is suspended when breakage of the seal ring does not occur at the 5,000,000th stroke.

### (Change in sliding resistance)

Among friction resistances generated when the seal ring wound on the piston and the inner surface of the cylinder make a relative reciprocating motion, a maximum resistance in each stroke is assumed to be a sliding resistance in that stroke. A maximum sliding resistance Fmax and a minimum sliding resistance Fmin are measured during the interval between an end of an initial drastic increase of the sliding resistance (There is a case where the end of the increase is detected by the 500,000th stroke) and the 5,000,000th stroke (or breakage of the seal ring), and a maximum change in the sliding resistance is represented by (Fmin/Fmax) × 100 (%).

### (Amount of oil leak)

After completion of 5,000,000 strokes, oil leaked from an oil chamber is collected and an amount thereof is measured with a measuring cylinder.

### EXAMPLES 9 to 10

The seal ring of the present invention was produced by molding in the same manner as in Example 8 except that the amounts of the heat resistant aromatic polyoxybenzoyl ester resin powder and graphite powder were changed as shown in Table 4, and the durability of the seal ring was evaluated in the same manner as in Example 8. The results are shown in Table 4.

### COMPARATIVE EXAMPLES 12 to 15

The seal rings for comparison were produced by granulating and molding in the same manner as in Example 8 except that the fillers shown in Table 4 were used, and the durability of the seal rings was evaluated in the same manner as in Example 8. The results are shown in Table 4.

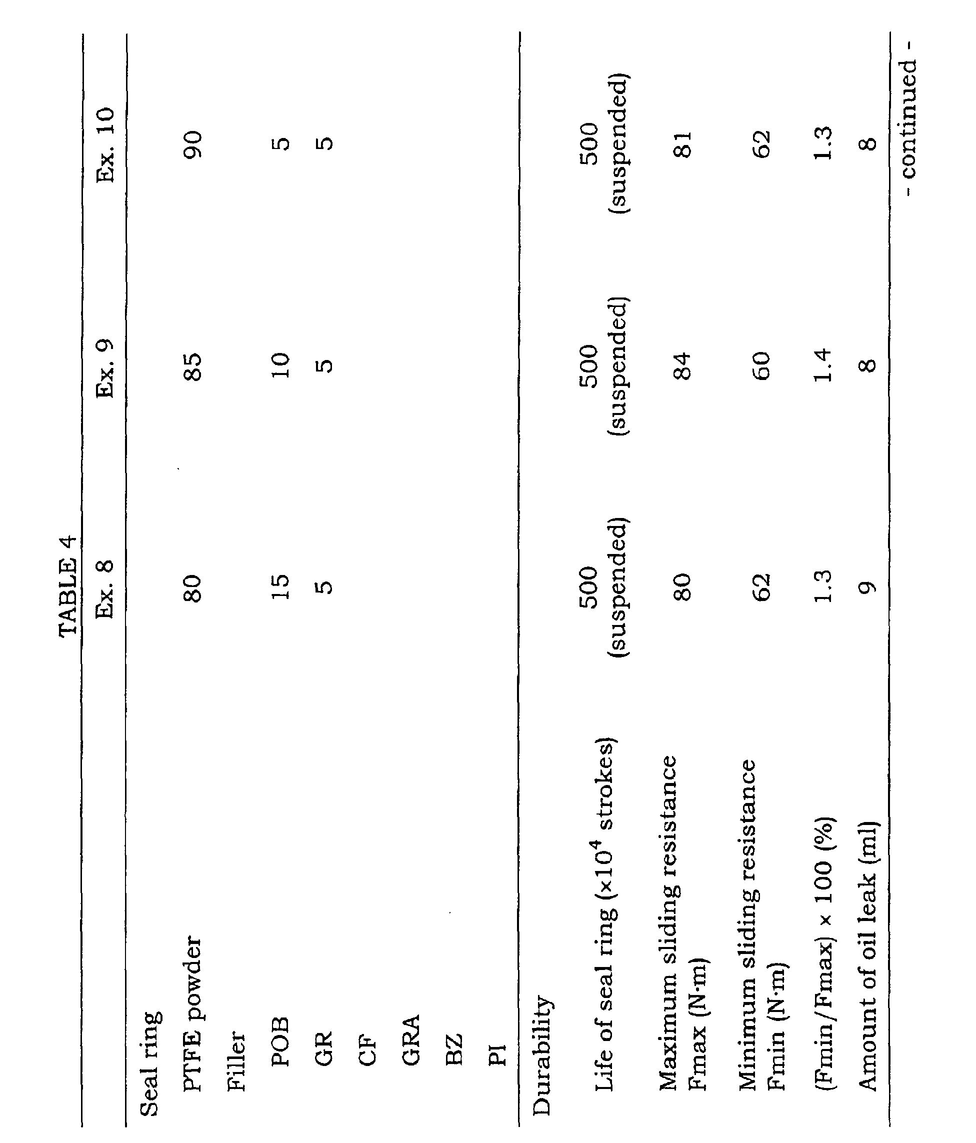

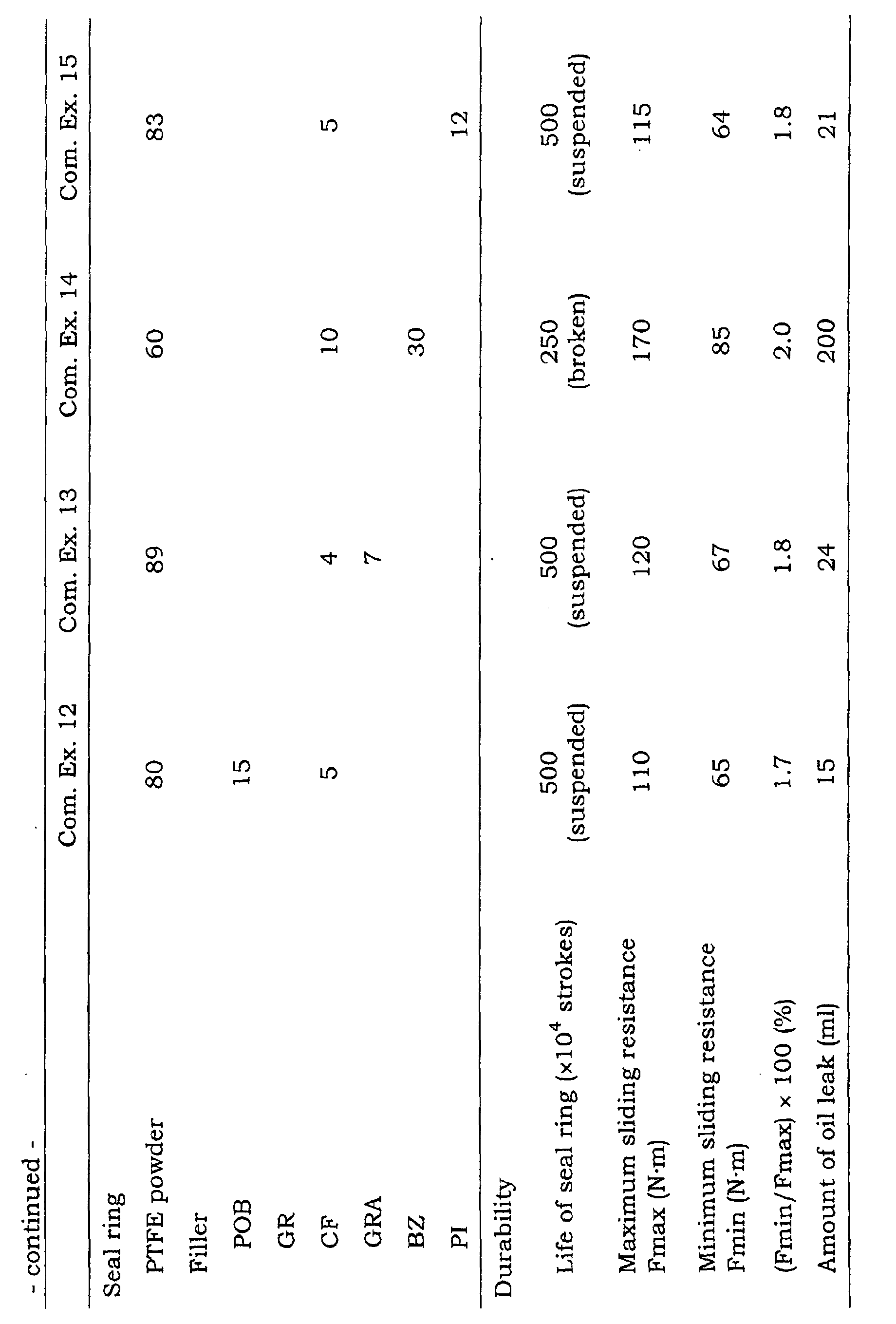

### INDUSTRIAL APPLICABILITY

In the seal ring of the present invention, a stable sealing effect can be obtained for a long period of time since a deformation of the seal ring is small even under a high pressure and an abrasion of an opposite material can be inhibited even if the opposite material is a soft metal. Further since a frictional force is small and a change in a sliding torque, particularly a change in a sliding torque at high oil pressure is small, operability and response of a valve device of a power steering, particularly a power steering of large cars can be enhanced markedly.

Also the seal ring of the present invention can exhibit excellent performance which has not been obtained so far, as a seal ring for an automatic transmission which slides at high revolutions and as a seal ring for a shock absorber which requires a sealing property under reciprocating sliding environment.

## Claims

1. A seal ring comprising 40 to 94 % by weight of a polytetrafluoroethylene powder, 3 to 30 % by weight of a heat resistant aromatic polyoxybenzoyl ester resin powder and 3 to 30 % by weight of a graphite powder.

2. The seal ring of Claim 1, wherein the polytetrafluoroethylene powder is a powder of polytetrafluoroethylene modified with a monomer copolymerizable with tetrafluoroethylene.

3. The seal ring of Claim 1 or 2, wherein the graphite powder is a natural graphite powder.

4. The seal ring of any of Claims 1 to 3 which is used for a valve device of a power steering of automobiles.

5. The seal ring of Claim 3 or 4, in which when a sliding cycle is applied on the seal ring under the following conditions, breakage of the seal ring does not occur at the 200,000th cycle, a sliding torque during the period of time of from the 10,000th cycle to the 200,000th cycle is within the range of not less than 75 % of the maximum sliding torque in that period, and an abraded depth of an opposite material after 200,000 cycles is not more than 15 µm.
Test equipment: Test equipment for evaluating durability of a seal ring which conforms with a rack & pinion type power steering device
Oil pressure: 12 MPa
Oil temperature: 120°C
Kind of oil: Power steering fluid
Cycle: One cycle consists of a normal rotation at 95 rpm for 2 seconds and a reverse rotation at 95 rpm for 2 seconds
Opposite material: Aluminum die cast (JIS H5302)
Seal ring-mounting material: Carbon steel (JIS G4051)
Seal ring: 36.4 mm of outer diameter, 1.5 mm of width, 1.80 mm of height

6. The seal ring of any of Claims 1 to 3, which is used for a valve device of a power steering of large-sized car operable at an oil pressure of not less than 12 MPa, in which when a sliding cycle is applied on the seal ring under the following conditions, breakage of the seal ring does not occur at the 200,000th cycle, a sliding torque within the period of 200,000 cycles without the period of initial unstable sliding torque is not less than 75 % of the maximum sliding torque in that period of 200,000 cycles, and during the period of 200,000 cycles without the period of initial unstable sliding torque, a ratio Tmax15/Tmax12 of the maximum sliding torque Tmax15 at an oil pressure of 15 MPa to the maximum sliding torque Tmax12 at an oil pressure of 12 MPa is less than 1.5.
Test equipment: Test equipment for evaluating durability of a seal ring which conforms with a rack & pinion type power steering device
Oil pressure: 12 MPa and 15 MPa
Oil temperature: 120°C
Kind of oil: Power steering fluid
Cycle: One cycle consists of a normal rotation at 95 rpm for 2 seconds and a reverse rotation at 95 rpm for 2 seconds
Opposite material: Carbon steel (JIS G3445)
Seal ring-mounting material : Carbon steel (JIS G4051)
Seal ring: 36.4 mm of outer diameter, 1.5 mm of width, 1.80 mm of height

7. The seal ring of any of Claims 1 to 3, which is used for an automatic transmission, in which when a rotation slide is applied on the seal ring under the following conditions, breakage of the seal ring does not occur in 500 hours and an abraded depth of an opposite material 500 hours after applying the rotation slide is not more than 10 µm.
Test equipment: Test equipment for evaluating durability of a seal ring which conforms with an automatic transmission device
Oil pressure: 2 MPa
Oil temperature: 120°C
Kind of oil: Automatic transmission fluid
Number of rotations: 8,000 rpm
Opposite material: Aluminum die cast (JIS H5302)
Seal ring-mounting material: Cast iron (JIS G5501)
Seal ring: 50 mm of outer diameter, 2 mm of width, 2 mm of height

8. The seal ring of any of Claims 1 to 3, which is used for a shock absorber, in which when reciprocating slide strokes are applied on the seal ring under the following conditions, breakage of the seal ring does not occur at the 5,000,000th stroke, the maximum slide resistance Fmax within the period of 5,000,000 strokes without the period of initial unstable slide resistance is less than 1.5 times the minimum slide resistance Fmin during that period of 5,000,000 strokes, and an amount of oil leakage after 5,000,000 strokes is not more than 15 ml.
Test equipment: Test equipment for evaluating durability of a seal ring which conforms with a shock absorber device
Oil pressure: 10 MPa
Oil temperature: 100°C
Kind of oil: Shock absorber oil
Length of stroke: 60 mm
Vibration frequency to be applied: 3 Hz
Opposite material: Carbon steel (JIS G4051)
Seal ring-mounting material: Cast iron (JIS G5501)
Seal ring: 28.5 mm of outer diameter, 7.4 mm of width, 0.8 mm of height (diameter of piston: 25 mm)
